# EUROPEAN PATENT APPLICATION

(11) **EP 4 803 387 A1**
(43) Date of publication of application: **09.09.2026**
(21) Application number: 25161526.6
(22) Date of filing: 04.03.2025
(51) Int. Cl.: B60T 13/66

(54) **A METHOD FOR SHORTENING A REACTION TIME OF AN ELECTRONIC BRAKE SYSTEM**

(71) Applicant: KB Intellectual Property GmbH & Co. KG, 82049 Pullach (DE)
(72) Inventor: NEMETH-NAGY, David, 1143 Budapest (HU)

(57) **Abstract**

A method for shortening a reaction time of an electronic brake system of a vehicle is disclosed. The electronic brake system comprises a service brake system and an electronic parking brake system, the service brake system being configured to control a service brake based on primary brake requests and based on secondary brake requests to set a service brake pressure at wheel ends, the electronic parking brake system being configured to control a parking brake and a parking brake pressure in one or more spring brake chambers, wherein an initial pressure level (p2) is set in the one or more spring brake chambers for releasing the parking brake. The method being characterized by receiving a secondary brake request for the service brake; lowering the initial pressure level (p2) without applying yet the parking brake; monitoring the service brake system; and when the monitoring detects a failure for the service brake, applying the parking brake according to the secondary brake request.

## Description

The present invention relates to a method for shortening a reaction time of an electronic brake system (EBS) of a vehicle, in particular, to a method of activation of a secondary brake control with a faster reaction time.

The electronic parking brake (EPB) carries out functions like activating and deactivating the parking brake during parking in combination with a hand control unit (HCU). In addition, the electronic parking brake can be used to implement additional safety and convenience functions, such as automatic braking while stopped and when getting out of the vehicle, or automatically releasing the brake when starting the vehicle. In addition, the electronic parking brake also allows the hand control unit for proportional braking in combination with the service brake.

Moreover, the electronic brake system uses brake requests generated by actuating the foot brake pedal. The EBS is further configured to decelerate the vehicle according to the brake request. A failure of the service brake system (e.g., in a foot brake module, in service brake components, a leakage) is a critical situation because a safe braking of the vehicle on motorways or on other roads may not be possible or less efficient. For example, the failure of the service brake system can be an electrical fault, a pneumatic fault, a mechanical fault.

In an event of a service braking system failure, less or no brake force is generated by the service brake. In this (critical) situation, the proportional braking function of the electronic parking brake may be activated in response to the failure of the service braking system. For example, the driver actuates the HCU or in case of an autonomous driving unit, the EPB automatically activates the parking brake proportionally.

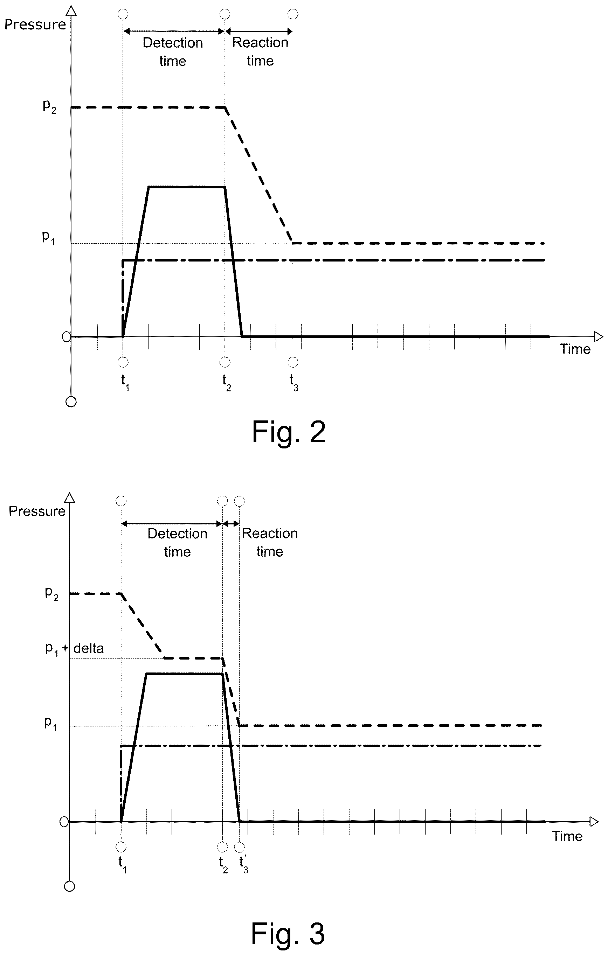

According to conventional methods, a failure in the service brake can be overcome or at least be mitigated by employing the secondary braking (e.g. a parking brake actuation), possibly in combination with the service brake. For example, **Fig.** 2 shows a diagram of a parking brake pressure as a function of time for a vehicle with a conventional EBS. If the service braking system fails, the pressure of the parking brake is reduced from an initial pressure level to a braking pad contact pressure (e.g., activated pressure level) in order to provide sufficient braking force for partial or complete deceleration of the vehicle.

However, it takes time to activate the secondary braking in this way, i.e. to activate the hand control unit and to reduce the parking brake pressure from the initial pressure level to the target pressure that is under the brake pad contact pressure. Same is true for any secondary brake request. Therefore, in conventional electronic brake systems the reaction time to a secondary brake request is slow resulting into unsafe situation where a prompt response is desirable.

At least some of these problems as described before are overcome by a method for shortening a reaction time of an electronic brake system according to claim 1 or an electronic brake system according to claim 10. The dependent claims refer to further advantageous realizations of the subject matter of the independent claims.

The present invention relates to a method for shortening a reaction time of an electronic brake system of a vehicle. The electronic brake system comprises a service brake system and an electronic parking brake system. The service brake system is configured to control a service brake based on primary brake requests and based on secondary brake requests to set a service brake pressure at wheel ends. The electronic parking brake system is configured to control a parking brake and a parking brake pressure in one or more spring brake chambers, wherein an initial pressure level is set in the one or more spring brake chambers for releasing the parking brake. The method includes the steps of:
- receiving a secondary brake request for the service brake;
- lowering the initial pressure level without applying yet the parking brake;
- monitoring the service brake system; and
- when the monitoring detects a failure for the service brake, applying the parking brake according to the secondary brake request.

The service brake may be controllable by a foot brake module. The parking brake may be controllable by a hand control unit included in the vehicle. Spring brake chambers can be provided on one or more vehicle axels. The service brake may also be configured to allow a proportional braking upon a proportional brake request from the hand control unit. The service brake may be configured to allow a proportional braking upon proportional brake requests from the hand control unit. Then, optionally, the secondary brake request is the proportional brake request from the hand control unit.

The secondary brake request may also be issued from the driving assist system (e.g. cruise control, a traffic jam assist, lane keeping assist, etc.)

Therefore, the method for shortening a reaction time of an electronic brake system may also comprise the steps of:
- receiving a proportional brake request for a proportional braking using the service brake from the hand control unit;
- monitoring the service brake pressure; and
- applying the parking brake when a drop in the service brake pressure is detected,
wherein the proportional brake request is generated by actuating the electronic parking brake (EPB).

In general, the electronic brake system can be activated according to requests of the hand control unit or of external requests of the EPB towards the EBS. Both requests can be seen as secondary brake requests for the service brake, in contrast to primary brake requests from the foot brake module. According to embodiments, in parallel to such secondary brake request, the EPB is lowering the initial pressure in spring brake chambers. The electronic park brake can continuously monitor the behavior of the service brake (signal state, a service brake signal, the pressure in the spring brake chambers, a deceleration time, a braking time, a braking distance, etc.) and if a failure is ascertained or detected, the EPB can modify the pressure in the spring brake chambers according to the hand control unit demand to initiate the secondary braking through the parking brake.

Optionally, the electronic brake system may be further configured to continuously detect the service brake pressure during a detection time. The vehicle may be expected to brake between the start of the detection time and the end of the detection time. If the vehicle fails to brake during the detection time the failure may be ascertained or detected. In some embodiments, the detection time may correspond to a time where the deceleration or braking of the vehicle should start and the absence of any deceleration may indicate a failure in the service brake system. According to embodiments, the speed of the commercial vehicle may be monitored on at least one vehicle axle via wheel speed sensors.

In the event of a service brake system malfunction or failure, braking is no longer possible or safe, and the electronic brake system may detect a loss of service brake pressure. Therefore, the electronic brake system is configured to switch from the primary brake system to a secondary brake system. The electronic braking system may further be configured to allow a proportional braking in parallel with service brake requests, wherein the electronic parking brake system is configured to allow the electronic parking brake for proportional braking in combination with the service brake.

Optionally, the proportional brake may be requested by a driver and/or an autonomous driving unit. For example, the driver may actuate the hand control unit to activate a proportional braking for the service brake. In some embodiments, the autonomous system of the vehicle sends an external brake request for a proportional brake.

Optionally, the electronic brake system may be configured to keep the parking brake pressure level between the initial pressure level and an activated pressure level when the secondary brake request is received.

Optionally, in the step of receiving a secondary brake request, the electronic brake system may be configured to reduce the pressure of the parking brake in the spring brake chambers from the initial pressure level to a stand-by pressure level. Optionally, the stand-by pressure level may be an activated pressure level of the parking brake plus a delta pressure.

It is understood that delta pressure is a pressure difference between the stand-by pressure level and the activated pressure level of the parking brake. For example, the delta pressure can be +1%, +5%, +10%, +15%, +20%, +25%, +30% of the activated pressure level. Advantageously or alternatively, the stand-by pressure can be any pressure between the initial pressure and the activated pressure of the parking brake. It is understood that the parking brake is not yet actuated at the stand-by pressure level. The delta pressure may also be selected such that the brake pads are already touch the brake disc (or are about to touch), but no braking force is yet applied (i.e. the vehicle is not yet decelerating).

The value of the delta pressure may depend on the time at which the service brake pressure drop is detected during the detection time. The service brake pressure drop can be detected at any time between the start of the detection time and the end of the detection time. The detection time can range from a few milliseconds to a few seconds or even a few minutes. The later the loss of service brake pressure is detected (e.g., at the latest possible moment in time), the lower the delta pressure value and the faster the reaction time.

Under normal operation, during the detection time, the vehicle is expected to start braking using the service brake. If, for some reason, no braking (e.g. no deceleration) happens, a failure of the service brake can be ascertained or detected. An advantage of a late detection of an exemplary service brake pressure drop is that the parking brake pressure level is reduced close to or nearly equal to the activated pressure level. Therefore, the reaction time is shorter when compared to reaching the activated pressure level from the initial pressure level of the parking brake.

Optionally, the vehicle may include a brake disc and one or more brake pads configured to provide a contact pressure onto the brake disc. Optionally, in the step of applying the parking brake, the parking brake pressure may be reduced from the stand-by pressure level to the activated pressure level to thereby press the one or more brake pads onto the brake disc.

In some embodiments, the electronic brake system may be configured to further reduce the parking brake pressure below the contact pressure of the one or more brake pads to further increase the efficiency of braking.

Optionally, the electronic brake system may be configured to maintain the stand-by pressure level of the parking brake as long as the secondary brake request is activated. If the service brake starts the braking as normally expected, the pressure level can again be increased to the initial pressure level. However, optionally, the electronic brake system can be configured to increase the pressure level of the parking brake pressure to the initial pressure level when the proportional brake request is deactivated (and not earlier) or when the service brake operates without failure.

Advantageously, in the step of applying the parking brake, the pressure level of the parking brake may be reduced to the activated pressure level by the end of the reaction time and may be maintained as long as the service brake request is active. The proportional brake request can be deactivated, for example, by actuating the hand control unit again. After deactivation of the proportional brake request, the pressure level of the parking brake may begin to increase up to the initial pressure level.

The described method may also be implemented in software or a computer program product or a computer-readable storage device. Embodiments of the present invention can, in particular, be in a control unit implemented by software or a software module in an ECU of the vehicle. Therefore, embodiment relate also to a computer program product or a computer-readable storage device having a program code for performing the method, when the computer program is executed on a processor.

Embodiments relates also to an electronic brake system, the electronic brake system comprises an electronic control unit including a processor and a memory with stored instructions that, when executed on the processor, to cause to perform the steps of the method for shortening a reaction time of an electronic brake system of a vehicle.

Embodiments also relates also to a commercial vehicle, the commercial vehicle having a truck or a tractor which can be coupled to one or more trailers and includes the electronic brake system.

Embodiments are suitable in particular for road vehicles and trailer combinations, which are predominantly commercial vehicles that comprises two or more connected units, typically towing vehicles (e.g., truck, tractor) and one or more towed vehicles (e.g., trailers), but may also include small trailers and caravans, which may be towed by passenger cars and light vans, or for example articulated commercial vehicles comprising tractors and semi-trailers.

Some examples of the methods and systems will be described in the following by way of examples only, and with respect to the accompanying figures, in which:
- Fig. 1: shows a flow diagram of a method for shortening a reaction time of an electronic brake system of a vehicle according to an embodiment;
- Fig. 2: shows a diagram of brake pressure variations of a conventional electronic brake system as a function of time;
- Fig. 3: shows a diagram of brake pressure variations as a function of time according to embodiments.

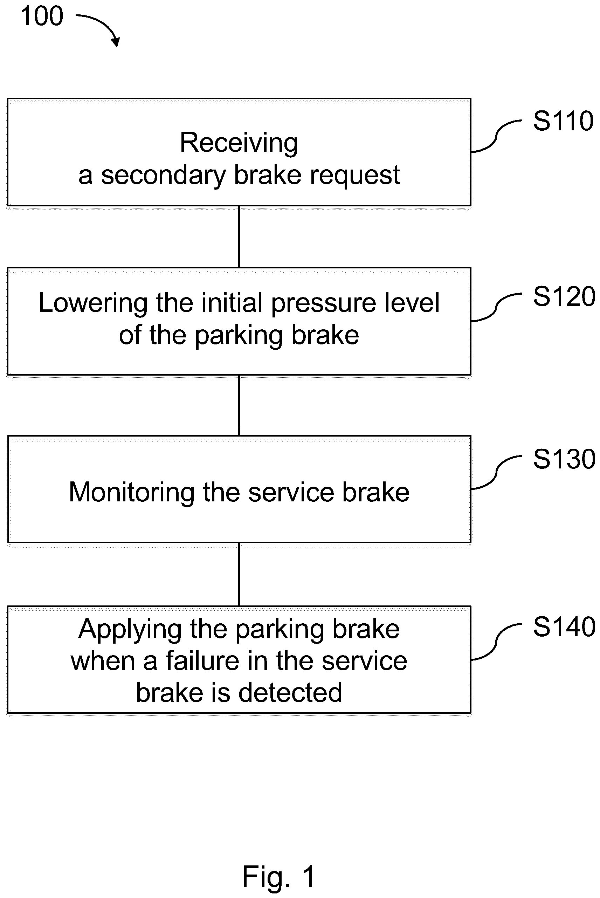

**Fig.** 1 shows a flow diagram of a method for shortening a reaction time of an electronic brake system of a vehicle.

The method 100 comprises at least one of the following steps:
- step S110:: receiving a secondary brake request (e.g. a proportional brake request for proportional braking using the hand control unit in combination with the service brake) and starting a detection time;
- step S120:: lowering the initial pressure level p2 of the parking brake without applying yet the parking brake;
- step S130:: monitoring the service brake (e.g. its pressure during the detection time);
- step S140:: when the monitoring detects a failure for the service brake, applying the parking brake according to the secondary brake request (the detected failure may be a drop in the service brake pressure).

For example, the proportional brake request can be generated by actuating the hand control unit by a driver and/or by an autonomous driving unit. The electronic brake system is configured to activate the electronic parking brake for proportional use in combination with the service brake.

For example, a sudden drop in the service brake pressure during the detection time may trigger the activation of the secondary braking using the parking brake. The end of the detection time may coincide with the start of the reaction time. By the end of the reaction time, the pressure of the parking brake can be dropped to the activated pressure level p1.

**Fig.** 2 shows a diagram of a pressure change of a service brake pressure and a parking brake pressure during braking of a vehicle, where the vehicle has a conventional electronic brake system.

The dashed line indicates the variation of the parking brake pressure in time. The solid line indicates the variation of the service brake pressure in time. The service brake request is shown with the dash-dotted line. The parking brake pressure may have an initial pressure level p2, which is greater than zero.

At time t1, the foot brake pedal is actuated to generate a brake force, the service brake pressure starts to increase and the vehicle is expected to slow down according to the service brake request.

In parallel, the hand control unit may be also actuated at time t1. The electronic brake system may be configured to detect the proportional brake request (e.g., service brake request). The proportional brake request can be generated automatically and/or by the driver. The electronic brake system may be further configured to detect a failure of the foot brake module and/or the service brake system. In the event of failure, the electronic brake system can switch to proportional braking and the electronic brake system may control the park brake chamber pressure according to the service brake request.

Upon detection of the foot brake module and/or the service brake system malfunction (e.g., at time t2), the electronic brake system may be configured to reduce the parking brake pressure from the initial pressure level p2 to an activated pressure level p1.

The vehicle may decelerate and/or stop upon reaching the activated pressure level of the parking brake p1 at time t3. The activated brake pressure p1 may correspond to the brake pads contact pressure.

The time interval between t2 and t3 may correspond to a reaction time of the electronic brake system to an event of the service brake system failure. Within the reaction time, the electronic bake system is configured to decelerate and/or to bring to a standstill the commercial vehicle.

In the conventional EBS of Fig. 2, when a malfunction of the service brake system and/or foot brake module is detected, the reaction time to activate the secondary braking system can be long because the parking brake pressure has to be reduced from an initial and high pressure level p2 to the activated brake pressure p1.

One of the disadvantage of the conventional EBS is that, in the event of a malfunction in the service brake system, the braking performance is reduced and the reaction time between time t2 and t3 is long, which can increase the deceleration of the commercial vehicle, and can make the vehicle a serious hazard on the road.

Therefore, there is a need to shorten the reaction time of an electronic brake system in the event of a malfunction in the service brake system.

**Fig.** 3 shows a diagram of a pressure change of a service brake pressure and a parking brake pressure during the braking of a vehicle, where the vehicle has an electronic brake system according to embodiments. The same symbols as in Fig. 2 are used in Fig. 3 to indicate the same parameters.

In Fig. 3, the dashed line indicates the variation of the parking brake pressure in time, the solid line indicates variation of the service brake pressure in time, and the proportional brake request (e.g., service brake request) is shown with the dash-dotted line.

While driving the vehicle, the parking brake pressure can be maintained at an initial pressure level p2, which is greater than zero, meanwhile the service brake pressure can be maintained at zero pressure level. The EBS is working according to the request of the hand control unit or external request of the EPB towards EBS. In parallel, the electronic parking brake may be configured to lower the initial pressure p2 in spring brake chambers.

According to embodiments, receiving the proportional brake request may trigger the electronic brake system to reduce the parking brake pressure from the initial pressure level p2 to a stand-by pressure level, then to maintain the parking brake pressure at the stand-by pressure level (e.g., at p1 + delta pressure). At the stand-by pressure level, the air in one or more spring brake chambers can be partially deflated.

The stand-by pressure level may correspond to the brake pads contact pressure plus a delta pressure. The time period between t1 and t2 can be denoted as a detection time and it may correspond to a preparation for a fast braking upon detection a drop in the service brake pressure. The service brake pressure may be continuously monitored and a pressure drop and can be detected (e.g., at t2 shown in Fig. 3), which may correspond to the end of the detection time.

The end of the detection time t2 may coincide with the start of the reaction time t2. The EPB may be configured to lower the initial pressure p2 in one or more spring brake chambers. For example, the initial pressure p2 can be continuously or abruptly reduced to the stand-by pressure level.

In some embodiments, by the end of the reaction time t3', the pressure of the parking brake can be dropped to the activated pressure level p1. In some embodiments, the start of the reaction time t2 and the end of the reaction time t3' may coincide, and the pressure of the parking brake may already be at the activated pressure level p1 to activate the brake pads.

In an event of failure, the EPB may be configured to modify the pressure according to the hand control unit request. For example, at time t2, the electronic brake system may be configured to switch from the primary brake system to a secondary brake system.

One of the advantages of the present embodiment is that, the air in the one or more spring brake chambers can already be partially deflated at the beginning of the reaction time at t2. The electronic brake system may need less time to further reduce the pressure of the parking brake to the activated pressure level p1 in the event of a failure of the service brake system, so that the vehicle can be decelerated and/or stopped in a short time. The reaction time between t2 and t3' shown in Fig. 3 is shorter than the reaction time between t2 and t3 shown in Fig. 2.

According to embodiments, the initial pressure of the parking brake p2 can be reduced to the activated pressure p1 in two steps. In the first step, the pressure of the parking brake can be reduced to a stand-by pressure level upon receiving the proportional brake request.

In the second step, the pressure of the parking brake can be further reduced to the activated pressure level p1 and one or more brake pads can be actuated.

The proportional brake request may include venting off one or more spring brake chambers (e.g., reducing the parking brake pressure by opening one or more valves) and simultaneously increasing the service brake pressure at wheel ends. The service brake actuators at time t1 can be open (e.g., released, without pressure). Between time t1 and t2, the pressure of the service brake can be increased and can be kept within a pressure range providing an optimal brake performance. The pressure range may depend on e.g., load of the commercial vehicle, braking conditions, other external circumstances.

During detection time between time t1 and time t2, the electronic brake system may be configured to detect a failure of the service brake system, for example a sudden pressure drop of the service brake. Due to the sudden pressure drop, the remaining service brake pressure may be not sufficient to ensure optimal brake performance.

One of the advantages of the present embodiments is that the parking brake pressure can be maintained at stand-by pressure level and the electronic brake system is ready to react to the service brake system failure in a short time. This is because, according to embodiments, the stand-by pressure level shown in Fig. 3 is lower than that of the initial pressure level of the conventional brake system shown in Fig. 2. In Fig. 2, the parking brake pressure is maintained at a pressure level p2 during the detection time between t1 and t2.

The length of the reaction time to an unexpected failure in the service braking system may depend on the pressure level of the electronic parking brake system.

According to embodiments, the electronic brake system may be configured to maintain the stand-by pressure level of the parking brake (i.e. p1 + Δ). For example, the stand-by pressure level of the parking brake can be maintained as long as the proportional brake request (e.g., HCU request) is received.

Additionally, or alternatively, when the proportional brake request is deactivated, the electronic brake system may be configured to increase the pressure level of the parking brake pressure from the stand-by pressure level to the initial pressure level p2. For example, the proportional brake request is no longer received when the driver and/or the autonomous driving unit releases the hand control unit.

The electronic parking brake system may be configured to maintain the brake force in parallel with the service brake request, proportioning at a pressure level where there is no brake force generated with the parking brake but really close to that pressure or even below to the contact pressure if the electronic brake system can send an acceptable stand-by pressure according to the current road scenario.

Switching between the primary brake system (e.g., EBS) and secondary brake system (e.g., EPB) in case of a failure can be time consuming in a critical situation (detection and deflating to the desired pressure from supply pressure first).

If the secondary braking is requested in parallel with the primary braking, the switch in case of failure can be much faster. The missing brake force can be replaced quicker, less performance decrease can be experienced.

When compared to conventional braking systems, embodiments of the present invention provide the following advantages:
- the functionality can be controlled by an already build-in EPB electronic control unit;
- practical application is an EPB and EBS combination for safe braking;
- redundant brake control with lower reaction time;
- the brake distance can be lowered, unintended reaction of driver can be avoided in case of a fault of the service brake system.

The electronic brake system may further include a sensor system. The sensor system may be configured to detect the actual deceleration and the actual speed of the commercial vehicle. For example, the speed of the commercial vehicle can be detected via wheel speed sensors.

In some embodiments, upon receiving the proportional brake request, the electronic brake system can be configured to continuously compare the actual deceleration with an expected (e.g., predefined) deceleration during the detection time between t1 and t2. When the actual deceleration is lower than an expected deceleration or the actual deceleration cannot be determined, the electronic brake system is configured to detect a deceleration failure and to activate the secondary brake system by requesting a proportional brake.

The description and drawings merely illustrate the principles of the disclosure. It will thus be appreciated that those skilled in the art will be able to devise various arrangements that, although not explicitly described or shown herein, embody the principles of the disclosure and are included within its scope.

### LIST OF REFERENCE SIGNS

- p1: activated pressure level of the parking brake
- p1+Δ: stand-by pressure level of the parking brake
- p2: initial pressure level of the parking brake
- t1: start of detection time
- t2: end of detection time/start of reaction time
- t3/t3': end of reaction time

## Claims

1. A method for shortening a reaction time of an electronic brake system of a vehicle, the electronic brake system comprising a service brake system and an electronic parking brake system, the service brake system being configured to control a service brake based on primary brake requests and based on secondary brake requests to set a service brake pressure at wheel ends, the electronic parking brake system being configured to control a parking brake and a parking brake pressure in one or more spring brake chambers, wherein an initial pressure level (p2) is set in the one or more spring brake chambers for releasing the parking brake,
**characterized by**
- receiving (S110) a secondary brake request for the service brake;
- lowering (S120) the initial pressure level (p2) without applying yet the parking brake;
- monitoring (S130) the service brake system; and
- when the monitoring detects a failure for the service brake, applying (S140) the parking brake according to the secondary brake request.

2. The method of claim 1, wherein the vehicle comprises a hand control unit for controlling the parking brake, the service brake being configured to allow a proportional braking upon proportional brake requests from the hand control unit, and the service brake being configured to allow a proportional braking upon proportional brake requests from the hand control unit,
where the received secondary brake is a proportional brake request from the hand control unit.

3. The method of claim 2, wherein the proportional brake is requested by a driver and/or an autonomous driving unit, and the electronic brake system is configured to keep the parking brake pressure level between the initial pressure level (p2) and an activated pressure level (p1).

4. The method of any one of claims 1 to 3, wherein the step of monitoring the service brake system includes a monitoring of a service brake pressure during a detection time, in which the vehicle is expected to brake using the service brake and if the vehicle fails to brake during the detection time the failure is detected.

5. The method according to any one of claims 1 to 4, wherein upon receiving the secondary brake request, the step of lowering (S120) the initial pressure level (p2) is initiated, wherein the electronic brake system reduces the pressure of the parking brake from the initial pressure level (p2) to a stand-by pressure level (p1 + Δ), wherein the stand-by pressure level (p1 + Δ) is an activated pressure level of the parking brake plus a delta pressure (Δ).

6. The method according to claim 5, wherein the vehicle includes a brake disc and one or more brake pads configured to provide a contact pressure onto the brake disc, wherein in the step of applying (S140) the parking brake, the parking brake pressure is reduced from the stand-by pressure level (p1 + Δ) to the activated pressure level (p1) to thereby press the one or more brake pads onto the brake disc.

7. The method according to claim 5 or claim 6, wherein the stand-by pressure level (p1 + Δ) is maintained as long as the secondary brake request is activated.

8. The method according to any one of claims 1 to 7, wherein the pressure level of the parking brake pressure returns to the initial pressure level (p2) when the proportional brake request is deactivated or when the service brake operates without failure.

9. A computer-readable storage device comprising program code for carrying out the method according to one of claims 1 to 8, when the program code is executed on a data processing unit.

10. An electronic brake system for a vehicle comprising a service brake system and an electronic parking brake system, the service brake system being configured to control a service brake based on primary brake requests and based on secondary brake requests to set a service brake pressure at wheel ends, the electronic parking brake system being configured to control a parking brake and a parking brake pressure in one or more spring brake chambers, wherein an initial pressure level (p2) is set in the one or more spring brake chambers for releasing the parking brake,
**characterized by comprising**
an electronic control unit including a processor and a memory with stored instructions that, when executed on the processor, to cause to perform the steps of the method according to any one of claims 1 to 8.

11. A commercial vehicle, the commercial vehicle having the towing vehicle,
**characterized by**
an electronic brake system of claim 10.
